# EUROPÄISCHE PATENTSCHRIFT

(11) **EP 2 867 074 B1**
(45) Veröffentlichungstag und Bekanntmachung des Hinweises auf die Patenterteilung: **23.09.2020**
(21) Anmeldenummer: 13730211.3
(22) Anmeldetag: 17.06.2013
(51) Int. Cl.: B60S 1/48, B60S 1/08

(54) **SCHEIBENWASCHVORRICHTUNG, INSBESONDERE FÜR EIN KRAFTFAHRZEUG**
WINDOW CLEANING DEVICE, ESPECIALLY FOR A MOTOR VEHICLE
DISPOSITIF DE LAVE-GLACE, CONÇU EN PARTICULIER POUR UN VÉHICULE AUTOMOBILE

(30) Priorität: 27.06.2012 DE 102012211012
(43) Veröffentlichungstag der Anmeldung: 06.05.2015
(73) Patentinhaber: Robert Bosch GmbH, 70442 Stuttgart (DE)
(72) Erfinder: ERNSTt, Waldemar, 71665 Vaihingen/Enz (DE); WOLZ, Udo, 71111 Waldenbuch (DE); BERNHARD, Manfred, 77815 Buehl (DE)
(86) Internationale Anmeldenummer: PCT/EP2013/062517
(87) Internationale Veröffentlichungsnummer: WO 2014/001123

(56) Entgegenhaltungen:
- EP-A2- 0 363 526
- DE-A1- 2 642 247
- DE-A1- 4 241 056
- DE-A1- 10 307 960
- DE-A1-102009 033 863
- DE-A1-102011 018 896
- DE-A1-102011 104 999
- FR-A1- 2 931 118

## Beschreibung

### Stand der Technik

Die Erfindung betrifft eine Scheibenwaschvorrichtung, insbesondere für ein Kraftfahrzeug.

Es sind schon Scheibenwaschvorrichtungen bekannt, die ein Schaltelement, ein über eine Scheibe eines Kraftfahrzeugs bewegbares Wischblatt und ein Benetzungsmittel, zur Aufbringung einer Flüssigkeit auf die Scheibe des Kraftfahrzeugs, aufweisen. Hierbei wird gleichzeitig mit dem Starten der Bewegung des Wischblatts das Benetzungsmittel in Betrieb gesetzt, in der Regel also eine Pumpe bestromt, so dass die Scheibe mit Flüssigkeit benetzt wird, während das Wischblatt pendelnd über die Scheibe bewegt wird.

Derartige Scheibenwaschvorrichtungen benötigen relativ viel Flüssigkeit, um die Scheibe optimal zu reinigen.

Eine Scheibenwaschvorrichtung gemäß dem Oberbegriff des Anspruchs 1 ist aus der DE 2642247 A1 bekannt.

### Offenbarung der Erfindung

### Vorteile der Erfindung

Die erfindungsgemäße Scheibenwaschvorrichtung mit den Merkmalen des Hauptanspruchs hat den Vorteil, dass eine optimale Reinigungswirkung bei einem minimalen Flüssigkeitsverbrauch erzielt wird. Hierzu ist eine Steuereinrichtung vorgesehen, die das Benetzungsmittel steuert.

Nach der Erfindung umfasst das Benetzungsmittel eine Pumpe und eine Düse.

Die Steuervorrichtung steuert zumindest die Pumpe des Benetzungsmittels.

In einer besonders geeigneten und damit vorteilhaften Ausführungsform steuert die Steuereinrichtung auch die Bewegung des Wischblatts.

Bei einer weiteren, besonders vorteilhaften Ausführungsform ist die Steuereinrichtung derart ausgebildet, dass sie nach einer Betätigung des Schaltelements Flüssigkeit auf die Scheibe aufbringt und das Wischblatt erst nach einer vorbestimmten Vorlaufzeit nach Betätigung des Schaltelements durch die Steuereinrichtung in Bewegung versetzt.

Idealerweise ist das Schaltelement so variabel ausgestaltet, dass die Vorlaufzeit veränderbar ist.

Weiter ist es als vorteilhaft anzusehen, wenn die Steuereinrichtung derart ausgebildet ist, dass sie die Aufbringung der Flüssigkeit nach einem vorbestimmten Ereignis selbsttätig stoppt.

In einer einfachen und damit vorteilhaften Ausführungsform ist dieses Ereignis das Erreichen einer vorbestimmten Position des Wischblatts oder eine vorbestimmte Benetzungszeit.

Idealerweise ist dieses Ereignis durch das Schaltelement veränderbar.

Nach der Erfindung wird vorgeschlagen, dass die Steuereinrichtung zumindest zwei unterschiedliche Waschprogramme umfasst, die in Abhängigkeit einer Betätigung des Schaltelements auswählbar sind, wodurch eine gewünschte Waschintensität des Benetzungsmittels eingestellt ist. Unter einem "Waschprogramm" soll in diesem Zusammenhang insbesondere ein Programm verstanden werden, welches zumindest einen Waschparameter umfasst. Unter einem "Waschparameter" soll in diesem Zusammenhang insbesondere ein Parameter verstanden werden, der einen Waschwasserdruck und/oder eine Zeitspanne der Benetzungszeit festlegt.

Ferner wird vorgeschlagen, dass ein Waschprogramm der zumindest zwei unterschiedlichen Waschprogramme durch zumindest eine codierte Betätigungsfolge des Schaltelements auswählbar ist, wodurch eine besonders intuitive Auswahlmöglichkeit ohne weitere Schaltelemente erzielt werden kann. Weiterhin vorteilhaft kann dadurch eine Flüssigkeitszuführung anforderungsabhängig vorgenommen werden, wodurch ein Waschwassereinsatz reduziert und ein Waschwasserbehälter verkleinert werden kann. Der verkleinerte Waschwasserbehälter kann wiederum zu einer CO²-Einsparung führen. Unter einer "codierten Betätigungsfolge" soll in diesem Zusammenhang insbesondere ein zeitlicher Betätigungsablauf des Schaltelements verstanden werden, der einem Ereignis eindeutig zugeordnet werden kann. Insbesondere kann eine codierte Betätigungsfolge aus zwei oder bevorzugt aus drei aufeinander folgenden Betätigungen bestehen, die innerhalb von zwei Sekunden vorgenommen werden. Alternativ ist es denkbar, dass ein Waschprogramm der zumindest zwei unterschiedlichen Waschprogramme durch eine über einen bestimmten Betätigungszeitraum durchgehende Betätigung des Schaltelements auswählbar ist. Insbesondere ist das Waschprogramm der zumindest zwei unterschiedlichen Waschprogramme, durch eine über zwei Sekunden durchgehende Betätigung des Schaltelements auswählbar.

Das nicht beanspruchte Verfahren hat den Vorteil, dass ein besonders geringer Flüssigkeitsverbrauch bei optimaler Reinigungswirkung erzielt wird.

Hierbei wird bei Betätigung des Schaltelements zunächst die Scheibe durch das Benetzungsmittel benetzt und nach einer Vorlaufzeit das Wischblatt über die Scheibe bewegt. Darüber hinaus wird auf diese Weise ein Trockenlaufen des Wischblatts verhindert.

Idealerweise wird die Benetzung der Scheibe gestoppt, wenn eine vorbestimmte Benetzungszeit oder eine vorbestimmte Position des Wischblatts erreicht wird. Besonders vorteilhaft ist es hierbei, wenn das Schaltelement zumindest zwei Schaltstufen umfasst und die vorbestimmte Benetzungszeit und/oder die vorbestimmte Position durch die Schaltstufe des Schaltelements vorbestimmt werden.

### Beschreibung der Zeichnungen

Ein Ausführungsbeispiel der Erfindung ist in den Zeichnungen dargestellt und in den nachfolgenden näher erläutert. Es zeigen:
Figur 1 eine schematische Darstellung einer erfindungsgemäßen Scheibenwaschvorrichtung und
Figur 2 verschiedene Positionen eines Wischblatts auf einer Scheibe bei Verwendung einer erfindungsgemäßen Scheibenwaschvorrichtung.

### Beschreibung des Ausführungsbeispiels

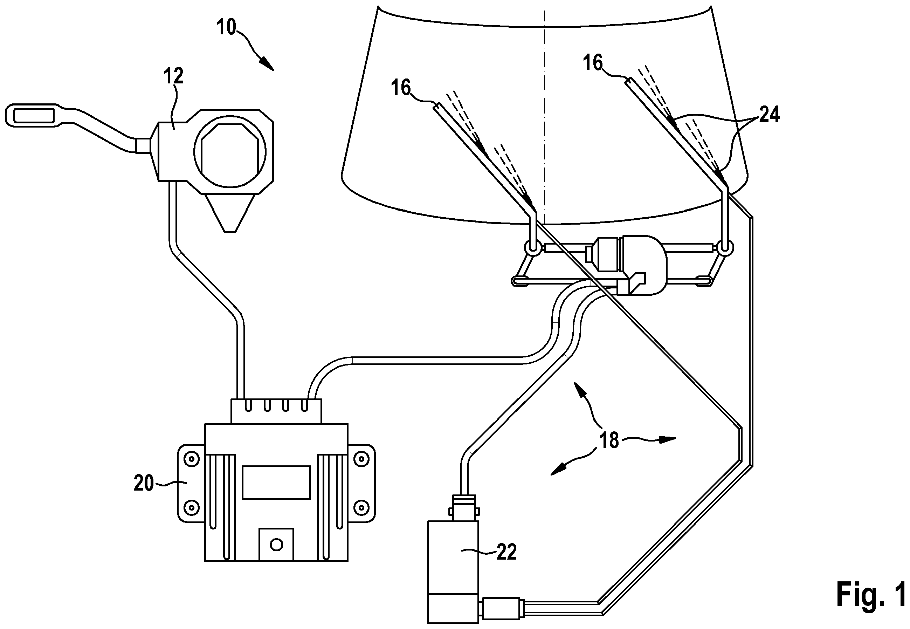

In Figur 1 ist eine erfindungsgemäße Scheibenwaschvorrichtung 10 in einer schematischen Darstellung gezeigt.

Diese umfasst ein Schaltelement 12, zwei Wischblätter 16 sowie ein Benetzungsmittel 18, das eine Pumpe 22 und eine Düse 24 umfasst. Die Wischblätter 16 sind über eine Scheibe 14 bewegbar und vollführen im Betrieb eine pendelnde Bewegung. Darüber hinaus umfasst die Scheibenwaschvorrichtung 10 eine Steuereinrichtung 20, die das Benetzungsmittel 18, insbesondere die Pumpe 22 des Benetzungsmittels 18, steuert.

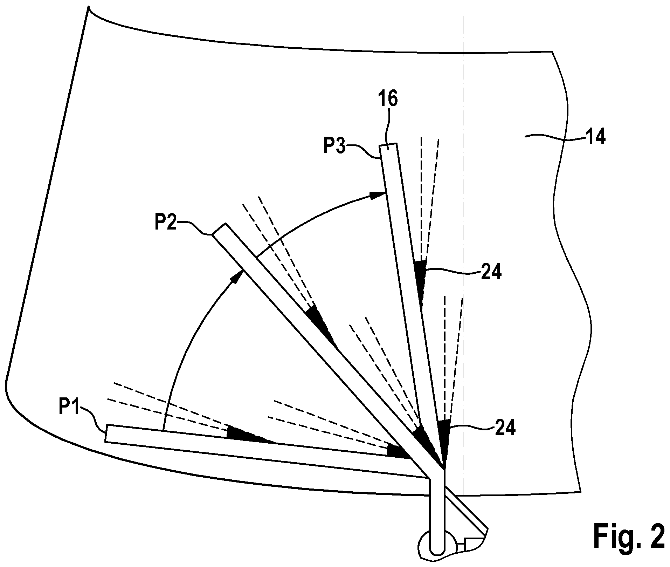

In Figur 2 ist die Scheibe 14 des Kraftfahrzeugs mit dem Wischblatt 16 in verschiedenen Positionen schematisch dargestellt. Das Wischblatt 16 trägt hier die Düsen 24 des Benetzungsmittels 18. Im Betrieb pendelt das Wischblatt 16 zwischen einer ersten Position P1 und einer dritten Position P3 hin und her. Die erste Position P1 entspricht hierbei einem Winkel von 0 Grad und die dritte Position P3 einem Winkel von 80 Grad, so dass die Position P3 mit der Position P1 also einen Winkel von 80 Grad einschließt.

Im folgenden soll die Funktion der erfindungsgemäßen Scheibenwaschvorrichtung 10 erläutert werden.

Wird das Schaltelement 12 vom Fahrer betätigt, so wird ein Schaltsignal an die Steuereinrichtung 20 vermittelt. Die Steuereinrichtung 20 setzt daraufhin die Pumpe 22 des Benetzungsmittels 18 in Betrieb, so dass aus den Düsen 24 eine Flüssigkeit zur Reinigung der Scheibe 14 austritt und die Scheibe 14 durch die Aufbringung dieser Flüssigkeit zumindest teilweise benetzt wird, während das Wischblatt 16 sich in der ersten Position P1 befindet. Nach einer vorbestimmten Vorlaufzeit VT setzt die Steuereinrichtung 20 das Wischblatt 16 in Bewegung, so dass sich dieses aus der ersten Position P1 in Richtung der dritten Position P3 zu bewegen beginnt. Hierbei lässt die Steuereinrichtung 20 die Pumpe 22 und damit das Benetzungsmittel 18 solange in Betrieb, bis eine zweite Position P2, die mit der ersten Position P1 einen Winkel von 30 Grad einschließt, erreicht ist. Sodann steuert die Steuereinrichtung 20 das Benetzungsmittel 18 derart an, dass keine Flüssigkeit mehr aus den Düsen 24 austritt. Dies geschieht dadurch, dass die Pumpe 22 nicht mehr bestromt wird. Das Erreichen der zweiten Position P2 ist damit also ein Ereignis, bei welchem die Benetzung der Scheibe 14 gestoppt wird. Das Wischblatt 16 bewegt sich jedoch weiter in Richtung der dritten Position P3. Ist die dritte Position P3 vom Wischblatt 16 erreicht, so wird die Bewegungsrichtung des Wischblatts 16 umgekehrt und es bewegt sich von der dritten Position P3 wieder in Richtung der ersten Position P1. Hierbei kann die Steuereinrichtung 20 das Benetzungsmittel 18 wiederum in beliebiger Weise ansteuern, beispielsweise die Pumpe 22 wieder in Betrieb setzen und bis zu einer beliebigen Position, die sich zwischen der dritten Position P3 und der ersten Position P1 befindet, Flüssigkeit auftragen.

Weiterhin kann - in einer Variation der Erfindung - das Benetzungsmittel 18 kurz vor Erreichen der dritten Position P3 an einer vierten Position P4 des Wischblatts 16 wieder Flüssigkeit auf die Scheibe 14 aufbringen. Diese vierte Position befindet sich damit also nach dem Passieren der zweiten Position P2, aber vor Erreichen der dritten Position P3. Insbesondere ist diese vierte Position P4 in der oberen Hälfte, vorzugsweise im oberen Viertel, des von der zweiten Position P2 und der dritten Position P3 eingeschlossenen Winkels, typischerweise nur wenige Winkelgrade vor der Position P3.

Ist das Wischblatt 16 wieder in die erste Position P1 zurückgekehrt, kann sich dieser Vorgang beliebig wiederholen.

In einer Variation der Erfindung ist das Schaltelement 12 mehrstufig, und damit mit mehreren Schaltstufen ausgebildet. Die mehrstufige Ausbildung ist hierbei derart vorgesehen, dass verschiedene Schaltsignale an die Steuereinrichtung 20 vom Schaltelement 12 vermittelt werden können und in Abhängigkeit dieser Schaltsignale die zweite Position P2, die Vorlaufzeit VT oder auch die Geschwindigkeit, mit der das Wischblatt 16 über die Scheibe 14 bewegt wird, bestimmt wird. In einer weiteren Variation der Erfindung ist es auch möglich, dass anstatt einer vorbestimmten zweiten Position P2 ein anderes Ereignis, beispielsweise eine vorbestimmte Benetzungszeit BT oder einer vorbestimmte Flüssigkeitsmenge vorgesehen wird.

Die Steuereinrichtung 20 umfasst hierbei zwei unterschiedliche Waschprogramme. Ein Waschprogramm bildet dabei ein Normalprogramm. Ein anderes Waschprogramm bildet ein Intensivprogramm. Somit umfasst die Steuereinrichtung 20 ein Normalprogramm und ein Intensivprogramm. Es ist in diesem Zusammenhang jedoch auch denkbar, dass die Steuereinrichtung 20 weitere Waschprogramme umfasst. Die Waschprogramme sind auf eine dem Fachmann bekannte Weise elektronisch in einer Speichereinheit der Steuereinrichtung 20 gespeichert. Eine Rechnereinheit der Steuereinrichtung 20 ist zum Auslesen und Ausführen der Waschprogramme vorgesehen.

Das Waschprogramm ist in Abhängigkeit einer Betätigung des Schaltelements 12 auswählbar. Im Normalprogramm steuert die Steuereinrichtung 20 das Benetzungsmittel 18 auf eine übliche, oben beschriebene Weise an. Im Intensivprogramm steuert die Steuereinrichtung 20 das Benetzungsmittel 18 mit einem höheren Waschwasserdruck als im Normalprogramm an. Dazu steuert die Steuereinrichtung 20 im Intensivprogramm die Pumpe 22 mit einer höheren Spannung als im Normalprogramm an. Ferner steuert die Steuereinrichtung 20 das Benetzungsmittel 18 im Intensivprogramm während eines Wischzyklus über eine längere Benetzungszeit BT als im Normalprogramm an. Es ist in diesem Zusammenhang auch denkbar, dass im Intensivprogramm bei Erreichen der vorbestimmten zweiten Position P2 das Aufbringen von Flüssigkeit fortgeführt wird und erst spätestens bei Erreichen der ersten Position P1 das Aufbringen von Flüssigkeit stoppt. Der Waschwasserdruck, die Benetzungszeit BT und ein Ignorieren der zweiten Position P2 sind als Parameter im Waschprogramm gespeichert. Es ist in diesem Zusammenhang auch denkbar, dass die Parameter über eine nicht näher gezeigte Einstelleinheit veränderbar ist.

Bei einer innerhalb von zwei Sekunden einzelnen Betätigung des Schaltelements 12 wählt die Steuereinrichtung 20 das Normalprogramm aus und startet dieses. Bei einer codierten Betätigungsfolge von drei aufeinander folgenden Betätigungen des Schaltelements 12, die innerhalb von zwei Sekunden vorgenommen werden, wählt die Steuereinrichtung 20 das Intensivprogramm aus und startet dieses. Es ist in diesem Zusammenhang auch denkbar, dass das Intensivprogramm durch eine über einen bestimmten Betätigungszeitraum durchgehende Betätigung des Schaltelements 12 auswählbar ist. Dabei ist es denkbar, dass das Intensivprogramm durch eine über zwei Sekunden durchgehende Betätigung des Schaltelements 12 auswählbar ist.

In einer Ausführungsform ist das Schaltelement 12 als Lenkstockschalter ausgebildet. Dieser kann eine Tastfunktion umfassen, die auch mehrere Taststufen umfassen kann. Beispielsweise kann bei Betätigung der Tastfunktion bis zu einem ersten Druckpunkt eine erste Schaltstufe vorbestimmt werden, bei der die Vorlaufzeit VT eine erste Zeitspanne, beispielsweise 200 Millisekunden, beträgt. Die erste Zeitspanne der Vorlaufzeit VT kann dabei auch andere, dem Fachmann als sinnvoll erscheinende Werte annehmen, wie insbesondere vorteilhaft Werte zwischen 100 Millisekunden und 400 Millisekunden. Bei einem Durchdrücken der Tastfunktion über diesen ersten Druckpunkt hinaus, beispielsweise bis zu einem zweiten Druckpunkt oder einen Endanschlag, wird eine zweite Schaltstufe vorbestimmt, die eine Vorlaufzeit VT aufweist, die länger ist als die erste Zeitspanne, beispielsweise 500 Millisekunden, so dass das Wischblatt 16 erst 500 Millisekunden nachdem die Benetzung der Scheibe 14 begonnen hat, in Bewegung versetzt wird und sich von der ersten Position P1 in Richtung der zweiten Position P2 bewegt.

Darüber hinaus kann in der ersten Schaltstufe neben der Vorlaufzeit VT die zweite Position P2, an der die Steuereinrichtung 20 das Benetzungsmittel 18 derart ansteuert, dass keine Flüssigkeit mehr aus den Düsen 24 austritt, mit der ersten Position P1 einen ersten Winkel, beispielsweise zwischen 20 Grad und 40 Grad, vorzugsweise etwa 30 Grad, einschließen. In der zweiten Schaltstufe kann dann, auch neben einer größeren Vorlaufzeit VT als in der ersten Schaltstufe, die zweite Position P2 mit der ersten Position P1 einen größeren Winkel einschließen als der erste Winkel, beispielsweise zwischen 40 Grad und 60 Grad, vorzugsweise etwa 50 Grad. Die Vorlaufzeit VT kann auch in beiden Schaltstufen gleich gewählt sein und lediglich die zweite Position P2 differieren. Entsprechend obigen Ausführungen kann auch die Benetzungszeit BT als Ereignis herangezogen sein und damit in der zweiten Schaltstufe länger gewählt sein als in der ersten Schaltstufe.

Ebenso kann eine dritte Schaltstufe vorgesehen werden, bei der die Tastfunktion bis zum Endanschlag durchgedrückt wird, bei der eine noch größere Vorlaufzeit und/oder eine andere zweite Position P2 vorbestimmt wird, die beispielsweise auch mit der dritten Position P3, in der das Wischblatt 16 seine Bewegungsrichtung umkehrt, identisch sein kann. Ebenso kann in dieser dritten Schaltstufe eine Dauerbenetzung vorgesehen sein, in der so lange Flüssigkeit auf die Scheibe aufgebracht wird, wie das Schaltelement 12 betätigt wird.

Die Düsen 24 können bei der erfindungsgemäßen Waschvorrichtung entweder in bekannter Weise an der Karosserie des Kraftfahrzeugs angeordnet sein oder direkt an einem oder beiden Wischblättern 16 angeordnet sein. Ebenso können die Düsen 24 an einem Wischerarm angeordnet sein, der das Wischblatt 16 trägt. Auch sind Kombinationen dieser Anordnungen möglich. Es ist ebenfalls denkbar, dass die Düsen 24 dazu vorgesehen sind, in eine Bewegungsrichtung des Wischblatts 16 betrachtet, sowohl vor als auch hinter das Wischblatt 16 Flüssigkeit auf die Scheibe 14 aufzutragen. Dieses Auftragen kann auch selektiv in Abhängigkeit der Bewegungsrichtung erfolgen, sodass die Flüssigkeit, in der aktuellen Bewegungsrichtung betrachtet, ausschließlich vor das Wischblatt 16 aufgetragen wird.

Ebenso können je nach Schaltstufe des Schaltelements 12 auch unterschiedliche Düsen 24 angesteuert werden. Beispielsweise können in einer ersten Schaltstufe nur Düsen 24 angesteuert werden, d.h. zur Benetzung herangezogen werden, die am Wischblatt 16 oder an einem das Wischblatt 16 tragenden Wischerarm, also wischblattfest, angeordnet sind, und in einer zweiten Schaltstufe Düsen 24 angesteuert werden, die fest am Fahrzeug, beispielsweise an einer Motorhaube oder unterhalb der Scheibe 14, also fahrzeugfest, angeordnet sind. In einer Variation können in der zweiten Schaltstufe auch sowohl wischblattfeste als auch fahrzeugfeste Düsen 24 angesteuert werden.

## Patentansprüche

1. Scheibenwaschvorrichtung (10), insbesondere für ein Kraftfahrzeug, mit einem Schaltelement (12), einem über eine Scheibe (14) bewegbaren Wischblatt (16) und einem, zumindest eine Pumpe (22) und eine Düse (24) umfassenden Benetzungsmittel (18), zur Aufbringung einer Flüssigkeit auf eine Scheibe (14) des Kraftfahrzeugs, wobei eine Steuereinrichtung (20) vorgesehen ist, die das Benetzungsmittel (18) steuert, wobei die Steuereinrichtung (20) zumindest ein Normalprogramm und ein Intensivprogramm aufweist und bei drei aufeinander folgenden Betätigungen des Schaltelements (12), die innerhalb von zwei Sekunden vorgenommen werden, oder bei einer über einen bestimmten Betätigungszeitraum, insbesondere über zwei Sekunden, durchgehende Betätigung des Schaltelements (12), von der Steuereinrichtung (20) das Intensivprogramm ausgewählt und gestartet wird, **dadurch gekennzeichnet, dass** die Pumpe (22) im Intensivprogramm mit einer höheren Spannung als im Normalprogramm, zur Erzeugung eines höheren Waschwasserdrucks, angesteuert wird.

## Claims

1. Window washing apparatus (10), in particular for a motor vehicle, comprising a switching element (12), a wiper blade (16) which can move over a window (14), and a wetting means (18), which comprises at least one pump (22) and one nozzle (24), for applying a liquid to a window (14) of the motor vehicle, wherein a control device (20) which controls the wetting means (18) is provided, wherein the control device (20) has at least one normal programme and one intensive programme and the intensive programme is selected and started by the control device (20) in the event of three successive operations of the switching element (12), which operations are performed within two seconds, or in the event of continuous operation of the switching element (12) over a specific operating time period, in particular over two seconds, **characterized in that** the pump (22) is actuated with a higher voltage in the intensive programme than in the normal programme for the purpose of generating a higher washing water pressure.

## Revendications

1. Dispositif lave-glace (10), en particulier pour un véhicule automobile, comprenant un élément de commutation (12), un balai d'essuie-glace (16) déplaçable sur une vitre (14) et un moyen de mouillage (18) comprenant au moins une pompe (22) et une buse (24), pour l'application d'un liquide sur une vitre (14) du véhicule automobile, un dispositif de commande (20) étant prévu, lequel commande le moyen de mouillage (18), le dispositif de commande (20) présentant au moins un programme normal et un programme intensif et le programme intensif étant sélectionné et lancé par trois actionnements successifs de l'élément de commutation (12), qui sont effectués en l'espace de deux secondes ou par un actionnement continu de l'élément de commutation (12) pendant une durée d'actionnement déterminée, en particulier pendant deux secondes, par le dispositif de commande (20), **caractérisé en ce que** la pompe (22) est commandée en programme intensif avec une tension supérieure à celle dans le programme normal, pour générer une pression d'eau de lavage supérieure.
